(19) Europäisches Patentamt
European Patent Office
Office européen des brevets

(11) EP 1 745 499 B1

# (12) EUROPEAN PATENT SPECIFICATION

(45) Date of publication and mention of the grant of the patent:
**21.10.2015 Bulletin 2015/43**

(21) Application number: **05740516.9**

(22) Date of filing: **03.05.2005**

(51) Int Cl.:
***H01J 49/00*** *(2006.01)* ***G01N 30/72*** *(2006.01)*
***G01N 30/86*** *(2006.01)*

(86) International application number:
**PCT/GB2005/001674**

(87) International publication number:
**WO 2005/106920 (10.11.2005 Gazette 2005/45)**

## (54) MASS SPECTROMETER

MASSENSPEKTROMETER

SPECTROMETRE DE MASSE

(84) Designated Contracting States:
**AT BE BG CH CY CZ DE DK EE ES FI FR GR HU IE IS IT LI LT LU MC NL PL PT RO SE SI SK TR**

(30) Priority: **30.04.2004 GB 0409676**
**20.05.2004 GB 0411251**

(43) Date of publication of application:
**24.01.2007 Bulletin 2007/04**

(73) Proprietor: **Micromass UK Limited**
**Wilmslow SK9 4AX (GB)**

(72) Inventors:
- **DENNY, Richard**
**Newcastle-under-Lyme,**
**Staffordshire (GB)**
- **RICHARDSON, Keith**
**High Peak,**
**Derbyshire SK22 4PP (GB)**

(74) Representative: **Jeffrey, Philip Michael**
**Dehns**
**St Bride's House**
**10 Salisbury Square**
**London**
**EC4Y 8JD (GB)**

(56) References cited:
**EP-A- 1 043 676** **EP-A- 1 598 666**
**WO-A-02/096540** **WO-A-03/095978**

- **BYLUND D ET AL: "Chromatographic alignment by warping and dynamic programming as a pre-processing tool for PARAFAC modelling of liquid chromatography-mass spectrometry data" JOURNAL OF CHROMATOGRAPHY A, ELSEVIER, AMSTERDAM, NL, vol. 961, no. 2, 5 July 2002 (2002-07-05), pages 237-244, XP004370624 ISSN: 0021-9673**
- **JAIN A K ET AL: "STATISTICAL PATTERN RECOGNITION: A REVIEW" IEEE TRANSACTIONS ON PATTERN ANALYSIS AND MACHINE INTELLIGENCE, IEEE SERVICE CENTER, LOS ALAMITOS, CA, US, vol. 22, no. 1, January 2000 (2000-01), pages 4-37, XP000936788 ISSN: 0162-8828**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 745 499 B1

Printed by Jouve, 75001 PARIS (FR)

## Description

The present invention relates to a method of mass spectrometry and a mass spectrometer. The preferred embodiment relates to the clustering, associating or grouping of data relating to peptide digest products obtained by liquid chromatography mass spectrometry ("LC-MS"). The data is preferably clustered by virtue of mass or mass to charge ratio and chromatographic retention time. In particular, mass spectral data relating to separate acquisitions or experimental runs is preferably associated and analysed. Furthermore, changes or differences in the relative concentrations, intensities or expression levels of analytes such as peptides or proteins in two or more different samples may be detected or recognised. Analytes which are expressed differently in two different samples may then be subsequently identified.

A non-hierarchical clustering method known as k-means clustering is known. This clustering method could in theory be applied to the problem of how to associate or cluster data relating to liquid chromatography mass spectrometry experiments which has been acquired in separate acquisitions or experiments.

The known k-means clustering approach involves classifying n data points into k clusters. Each point or datum is assigned to a cluster whose average value on a set of d variables is nearest to its centroid by some distance measure (usually Euclidean) on that set. Such assignments can be computed iteratively until reassigning points and recomputing centroids (over all points in a cluster) produces no further changes.

However, k-means clustering suffers from the problem that the number of clusters k needs first to be specified before clustering can be performed. Also, k-means clustering only finds specific locations for the cluster centres rather than integrating over all the possible locations of the cluster centres. The ad hoc distance criterion also cannot properly be normalised to give a probability of association between two data points.

A person skilled in the art will therefore appreciate that there are various limitations inherent with using k-means clustering to cluster LC-MS data. The preferred embodiment relates to a completely different approach to clustering LC-MS data which involves a probabilistic or Bayesian approach to clustering LC-MS data.

By way of background, Bayesian probability theory handles probabilities of statements. Probabilities tell how certain those statements are true. For example, a probability of 1 means that there is absolute certainty. A probability of 0 also means that there is absolute certainty, but absolute certainty that the statement is false. A probability of 0.5 means that there is maximum uncertainty whether the statement is true or false.

Changing probabilities when getting new information is an important aspect of Bayesian reasoning. So called Bayes rule defines how a rational agent changes its beliefs when it gets new information (evidence).

Bayesian probabilities or certainties are always conditional. This means that probabilities are estimated in the context of some background assumptions. Conditional probabilities may be written using the notation P(Thing|Assumption). The probabilities are numbers between zero and one, that tell how certain it is that Thing is true when it is believed that the Assumption is true. Conditional probabilities are often written in the form P(D|M) or P(M|D), where M is dependency model and D is data. Accordingly, P(D|M) means the probability of obtaining data D if it is believed that model M is the true model. Likewise, P(M|D) means the probability that the model M is the true model given the data D. Sometimes probabilities are presented just as P(M) or P(D), but these are imprecise Bayesian notations, since all the probabilities are actually conditional. However, sometimes, when all the terms have the same background assumptions then it may not be necessary to repeat them. In theory, probabilities should be written in the form P(D|M, U) and P(M|D,U) and P(M|U) and P(D|U), where U is a set of background assumptions.

Expert systems often calculate the probabilities of inter-dependent events by giving each parent event a weighting. Bayesian Belief Networks are considered to provide a mathematically correct and therefore more accurate method of measuring the effects of events on each other. The mathematics involved enable calculations to be made in both directions. So it is possible, for example, to find out which event was the most likely cause of another.

The following Product Rule of probability for independent events is well known:

$$p(AB) = p(A) * p(B)$$

where p(AB) means the probability of A and B happening.

This is a special case of the following Product Rule for dependent events, where p(A|B) means the probability of A given that B has already occurred:

$$p(AB) = p(A) * p(B|A)$$

$$p(AB) = p(B) * p(A|B)$$

So because:

$$p(A)\ p(B|A) = p(B)\ p(A|B)$$

Then:

$$p(A|B) = (p(A)*p(B|A))/p(B)$$

The above equation is a simpler version of Bayes' Theorem. This equation gives the probability of A happening given that B has happened, calculated in terms of other probabilities which are known.

Bayes' theorem can be summarised as:

$$P(H_0|E) = \frac{P(E|H_0)P(H_0)}{P(E)}$$

$H_0$ can be taken to be a hypothesis which may have been developed ab initio or induced from some preceding set of observations, but before the new observation or evidence E. The term $P(H_0)$ is called the prior probability of $H_0$. The term $P(E|H_0)$ is the conditional probability of seeing the observation E given that the hypothesis $H_0$ is true - as a function of $H_0$ given E, it is called the likelihood function. The term P(E) is called the marginal probability of E and it is a normalizing constant and can be calculated as the sum of all mutually exclusive hypotheses:

$$\sum P(E|H_i)P(H_i)$$

The term $P(H_0|E)$ is called the posterior probability of $H_0$ given E. The scaling factor $P(E|H_0)/P(E)$ gives a measure of the impact that the observation has on belief in the hypothesis. If it is unlikely that the observation will be made unless the particular hypothesis being considered is true, then this scaling factor will be large. Multiplying this scaling factor by the prior probability of the hypothesis being correct gives a measure of the posterior probability of the hypothesis being correct given the observation.

The keys to making the inference work is the assigning of the prior probabilities given to the hypothesis and possible alternatives, and the calculation of the conditional probabilities of the observation under different hypotheses.

In view of the fact that there are certain limitations in attempting to using a k-clustering approach to dealing with LC-MS data, it is desired to provide an improved method of correctly clustering, associating or grouping LC-MS data.

According to an aspect of the present invention there is provided a method of mass spectrometry as claimed in claim 1.

According to the preferred embodiment the method further comprises determining a first physico-chemical property and a second physico-chemical property of components, molecules or analytes in one or more further samples, wherein the first physico-chemical property comprises the mass or mass to charge ratio and the second physico-chemical property comprises the elution time, hydrophobicity, hydrophilicity, migration time, or chromatographic retention time.

A likely error of the first physico-chemical property and/or a likely error of the second physico-chemical property are preferably determined.

Components, molecules or analytes in the first sample and/or the second sample and/or further samples are preferably separated by liquid chromatography. According to an embodiment components, molecules or analytes in the first sample and/or the second sample and/or further samples are separated from other components, molecules or analytes: (i) High Performance Liquid Chromatography ("HPLC"); (ii) anion exchange; (iii) anion exchange chromatography; (iv) cation exchange; (v) cation exchange chromatography; (vi) ion pair reversed-phase chromatography; (vii) chromatography; (vii) single dimensional electrophoresis; (ix) multi-dimensional electrophoresis; (x) size exclusion; (xi) affinity; (xii) revere phase chromatography; (xiii) Capillary Electrophoresis Chromatography ("CEC"); (xiv) electrophoresis; (xv) ion mobility separation; (xvi) Field Asymmetric Ion Mobility Separation ("FAIMS"); or (xvi) capillary electrophoresis.

A single data set is preferably formed from data relating to the first sample and/or data relating to the second sample and/or data relating to further samples. A sample number is preferably assigned to data in the single data set.

The step of probabilistically associating, clustering or grouping data relating to components, molecules or analytes in the first sample with data relating components, molecules or analytes in the second sample preferably further comprises using or adopting a method of trial and error and determining the most probable association, clustering or grouping of data.

Preferably, data points related to components, molecules or analytes in the first sample are compared with data points related to components, molecules or analytes in the second sample and/or data points related to components, molecules or analytes in further samples.

Each data point preferably comprises a value of the first physico-chemical property and/or a value of the second physico-chemical property. The data points are preferably divided or separated into mass or mass to charge ratio bins having a width of x Daltons wherein x is preferably selected from the group consisting of: (i) 1.0000-1.0001; (ii) 1.0001-1.0002; (iii) 1.0002-1.0003; (iv) 1.0003-1.0004; (v) 1.0004-1.0005; (vi) 1.0005-1.0006; (vii) 1.0006-1.0007; (viii) 1.0007-1.0008; (ix) 1.0008-1.0009; (x) 1.0009-1.0010; (xi) < 1.0000; (xii) > 1.0010; and (xiii) 1.0005.

The data is preferably initially clustered, grouped or associated into one or more first clusters of data points. The step of clustering the data points into one or more first clusters of data points preferably comprises probabilistically clustering the data points although less preferably other approaches may be used to initially cluster the data.

The preferred method preferably further comprises assessing the closeness of data points on a pairwise basis. The step of assessing the closeness of data points on a pairwise basis preferably comprises assessing the closeness of data points in a mass or mass to charge ratio bin given determined mass errors or mass to charge ratio errors on a pairwise basis.

The preferred method further comprises calculating probabilistically the likelihood that two data points relate to the same component, molecule or analyte. Preferably, the method further comprises determining pairwise probabilities $p_{ij}$ that two data points relate to the same component, molecule or analyte.

According to the preferred embodiment the method further comprises arranging the pairwise probabilities $p_{ij}$ in a matrix. Preferably, one or more trial truth tables are assigned to the matrix. The method preferably further comprises checking whether or not the matrix is self consistent by determining whether or not the matrix obeys a transitivity property. The transitivity property preferably comprises $b_{jk} = b_{ij}$ AND$b_{ik}$. If the matrix does not obey the transitivity property then the method preferably further comprises rejecting the trial truth table. If the matrix does obey the transitivity property then the method preferably further comprises assigning a probability to the trial truth table.

According to an embodiment the method further comprises assigning further trial truth tables to the matrix. In a similar manner to before, the method preferably checks whether or not the matrix is self consistent by determining whether or not the matrix obeys a transitivity property which preferably comprises $b_{jk}$=$b_{ij}$AND$b_{ik}$. If the matrix does not obey the transitivity property then the method further comprises rejecting the further trial truth table. If the matrix does obey the transitivity property then the method further comprises assigning a probability to the further trial truth tables.

A particularly preferred aspect of the preferred embodiment comprises determining the most probable truth table.

According to a less preferred embodiment the data may initially be clustered, grouped or associated into one or more first clusters of data points comprises using k-means clustering or other methods known per se.

Once the data has been initially clustered, preferably using a probabilistic approach but less preferably using other approaches, the clustering of data is then optionally tested to see whether it can be improved upon. It is possible that at the end of this optional testing the clustering of data may not have substantially changed. Indeed, according to an embodiment it is contemplated that the data may be optimally initially clustered by the disclosed probabilistic clustering method and the further steps do not result in any initial improvement in the clustering of data.

According to the preferred embodiment the method preferably further comprises probabilistically clustering the data points into one or more second clusters of data points. The method may comprise maximising the overall probability or equivalently of the one or more second clusters of data points. This may involve moving or putting data points into new clusters of data points. Preferably, each data point may be moved or put into the same cluster as a data point having the nearest higher or lower value of the first physico-chemical property and/or the second physico-chemical property. According to an embodiment each data point may be moved or put into its own cluster if it is initially in the same cluster as a neighbouring data point. Preferably, the method further comprises iteratively modifying the cluster to which a or each data point is initially considered to belong until substantially no further improvement is found. The method of iteratively modifying the cluster to which a or each data point is initially considered to belong may continue until a pre-assigned iteration limit is reached.

According to a particularly preferred aspect of the preferred embodiment the method further comprises interrogating the one or more second (or less preferably first) clusters of data points to determine one or more third clusters of data points which preferably include one and only one data point representing a molecule, analyte or ion from the first sample, the second sample and any further samples.

However, it is contemplated that according to less preferred embodiments this strict requirement may sometimes be dropped especially if there is a large amount of data. Accordingly, according to a less preferred embodiment the method may further comprise interrogating the one or more second (or less preferably first) clusters of data points to determine one or more third clusters of data points which generally (but not necessarily exclusively) include one data point representing a molecule, analyte or ion from the first sample, the second sample and any further samples.

Preferably, the data points relating to the third clusters of data points are assumed to have or assigned a high level of certainty or are assumed to have or are assigned a value of true or one. These data points then act as internal reference points.

Preferably, the data relating to the second physico-chemical property of molecules, analytes or ions in at least some or each of the one or more third clusters of data points is averaged to form an average value for the second physico-chemical property. Preferably, data of the one or more data points which is clustered to form the third clusters of data points is adjusted such that the average value becomes the value of the second physico-chemical property for the data points.

Once the internal reference points have been assigned an average value of the second physico-chemical property (e.g. retention time) then either the remaining data or more preferably the whole data set is then realigned or calibrated in relation to these internal references.

According to the preferred embodiment the method preferably further comprises determining a calibration function to correlate or correct data relating to the observed second physico-chemical property with the average value for the second physico-chemical property. The calibration function may comprise a cubic spline function, a polynomial function or a probabilistic calibration function.

Preferably, the method further comprises adjusting data points from each sample or from all samples to align recalibrate, correct or reassign the second physico-chemical property for all data sets. Once the data has been realigned or recalibrated then the method preferably further comprises determining or assigning an error for the second physico-chemical property (e.g. retention time).

The preferred method preferably further comprises comparing adjusted data points related to components, molecules or analytes in the first sample with adjusted data points related to components, molecules or analytes in the second sample and/or adjusted data points related to components, molecules or analytes in further samples.

Each adjusted data point preferably comprises an unadjusted value of the first physico-chemical property and/or an adjusted value of the second physico-chemical property.

The adjusted data points are preferably divided or separated into mass or mass to charge ratio bins having a width of x Daltons wherein x is preferably selected from the group consisting of: (i) 1.0000-1.0001; (ii) 1.0001-1.0002; (iii) 1.0002-1.0003; (iv) 1.0003-1.0004; (v) 1.0004-1.0005; (vi) 1.0005-1.0006; (vii) 1.0006-1.0007; (viii) 1.0007-1.0008; (ix) 1.0008-1.0009; (x) 1.0009-1.0010; (xi) < 1.0000; (xii) > 1.0010; and (xiii) 1.0005.

According to the preferred embodiment the method preferably further comprises clustering the adjusted data points into one or more fourth clusters of data points.

The step of clustering the adjusted data points into one or more fourth clusters of data points preferably comprises probabilistically clustering the data points in a similar manner to before. The method therefore preferably comprises assessing the closeness of adjusted data points on a pairwise basis, wherein the step of assessing the closeness of adjusted data points on a pairwise basis comprises assessing the closeness of adjusted data points in a mass or mass to charge ratio bin given determined mass errors or mass to charge ratio errors on a pairwise basis.

The method preferably further comprises calculating probabilistically the likelihood that two adjusted data points relate to the same component, molecule or analyte. The method preferably further comprises determining pairwise probabilities that two adjusted data points relate to the same component, molecule or analyte.

According to the preferred embodiment the pairwise probabilities $p_{ij}$ are preferably arranged in a second matrix. One or more second truth tables are preferably assigned to the second matrix. A check is preferably made as to whether or not the second matrix is self consistent by determining whether or not the second matrix obeys a transitivity property. The transitivity property preferably comprises $b_{jk} = b_{ij}$ AND$b_{ik}$.

If the second matrix does not obey the transitivity property then the method preferably further comprises rejecting the second trial truth table. If the second matrix does obey the transitivity property then the method preferably further comprises assigning a probability to the second trial truth table.

According to the preferred embodiment the method further comprises assigning further second trial truth tables to the second matrix. The method preferably further comprises checking whether or not the second matrix is self consistent by determining whether or not the second matrix obeys a transitivity property. Preferably, the transitivity property comprises $b_{jk} = b_{ij}$AND$b_{ik}$. If the second matrix does not obey the transitivity property then the method preferably further comprises rejecting the further second trial truth table. If the second matrix does obey the transitivity property then the method preferably further comprises assigning a probability to the second further trial truth tables.

According to an embodiment the method further comprises determining the most probable second truth table.

According to a less preferred embodiment the step of clustering the data into one or more fourth clusters of data points comprises using k-means clustering.

The preferred embodiment preferably comprises probabilistically clustering the adjusted data points into one or more fifth clusters of data points. This step is optional but not essential.

The preferred embodiment preferably comprises maximising the overall probability or equivalently of the one or more fifth clusters of data points. This preferably involves moving or putting data points into new clusters of data points. Preferably, each data point is moved or put into the same cluster as a data point having the nearest higher or lower value of the first physico-chemical property and/or the second physico-chemical property. Preferably, each data point is moved or put into its own cluster if it is initially in the same cluster as a neighbouring data point. The method preferably further comprises iteratively modifying the cluster to which a or each data point is initially considered to belong until substantially no further improvement is found. According to an embodiment the method further comprises iteratively modifying the cluster to which a or each data point is initially considered to belong until a pre-assigned iteration limit is reached.

According to an embodiment the method comprises determining the intensity of first components, molecules or analytes in the first sample and/or first components, molecules or analytes in the second sample and/or first components, molecules or analytes in further samples.

Preferably, the intensity of the first components, molecules or analytes in the first sample is compared with corresponding first components, molecules or analytes in the second sample and/or further samples, wherein the first components, molecules or analytes belong to the same association, clustering or grouping of data. The first sample and/or the second sample and/or further samples may comprise a plurality of different biopolymers, proteins, peptides, polypeptides, oligionucleotides, oligionucleosides, amino acids, carbohydrates, sugars, lipids, fatty acids, vitamins, hormones, portions or fragments of DNA, portions or fragments of cDNA, portions or fragments of RNA, portions or fragments of mRNA, portions or fragments of tRNA, polyclonal antibodies, monoclonal antibodies, ribonucleases, enzymes, metabolites, polysaccharides, phosphorolated peptides, phosphorolated proteins, glycopeptides, glycoproteins or steroids.

Preferably, the first sample and/or the second sample and/or further samples comprise at least 2, 5, 10, 20, 30, 40, 50, 60, 70, 80, 90, 100, 200, 300, 400, 500, 600, 700, 800, 900, 1000, 1500, 2000, 2500, 3000, 3500, 4000, 4500, or 5000 components, molecules or analytes having different identities.

The first sample and/or the second sample and/or further samples may comprise a non-equimolar heterogeneous complex mixture.

The components, molecules or analytes in the first sample are preferably substantially the same as the components, molecules or analytes in the second sample and/or further samples.

The components, molecules or analytes are preferably endogenous or exogenous to the first sample and/or the second sample and/or further samples.

According to an embodiment either: (i) the first sample is taken from a diseased organism and the second sample is taken from a non-diseased organism; (ii) the first sample is taken from a treated organism and the second sample is taken from a non-treated organism; or (iii) the first sample is taken from a mutant organism and the second sample is taken from a wild type organism.

Preferably, the method further comprises identifying one or more of the components, molecules or analytes in the first sample and/or the second sample and/or further samples.

According to an embodiment one or more components, molecules or analytes in the first sample and/or one or more components, molecules or analytes in the second sample and/or one or more components, molecules or analytes in further samples are only identified if the intensity of one or more components, molecules or analytes in the first sample differ from the intensity of one or more components, molecules or analytes in the second sample and/or further samples by more than a predetermined amount.

According to an embodiment one or more components, molecules or analytes in the first sample and/or one or more components, molecules or analytes in the second sample and/or one or more components, molecules or analytes in further samples are only identified if the average intensity of a plurality of different components, molecules or analytes in the first sample differs from the average intensity of a plurality of different components, molecules or analytes in the second sample and/or further samples by more than a predetermined amount.

The predetermined amount is preferably selected from the group consisting of: (i) 1%; (ii) 2%; (iii) 5%; (iv) 10%; (v) 20%; (vi) 50%; (vii) 100%; (viii) 150%; (ix) 200%; (x) 250%; (xi) 300%; (xii) 350%; (xiii) 400%; (xiv) 450%; (xv) 500%; (xvi) 1000%; (xvii) 5000%; and (xviii) 10000%.

According to an aspect of the present invention there is provided a mass spectrometer as claimed in claim 19.

The mass spectrometer preferably comprises a liquid chromatograph. According to an embodiment the mass spectrometer further comprises one or mass filters and/or one or more mass analysers. The one or more mass filters and the one or more mass analysers are selected from the group consisting of: (i) an orthogonal acceleration Time of Flight mass analyser; (ii) an axial acceleration Time of Flight mass analyser; (iii) a Paul 3D quadrupole ion trap mass analyser; (iv) a 2D or linear quadrupole ion trap mass analyser; (v) a Fourier Transform Ion Cyclotron Resonance mass analyser; (vi) a magnetic sector mass analyser; (vii) a quadrupole mass analyser; and (viii) a Penning trap mass analyser.

The mass spectrometer preferably further comprises an ion source. The ion source preferably comprises a pulsed ion source or a continuous ion source. The ion source is preferably selected from the group consisting of: (i) an Electrospray ionisation ("ESI") ion source; (ii) an Atmospheric Pressure Photo Ionisation ("APPI") ion source; (iii) an Atmospheric Pressure Chemical Ionisation ("APCI") ion source; (iv) a Matrix Assisted Laser Desorption Ionisation ("MALDI") ion source; (v) a Laser Desorption Ionisation ("LDI") ion source; (vi) an Atmospheric Pressure Ionisation ("API") ion source; (vii) a Desorption Ionisation on Silicon ("DIOS") ion source; (viii) an Electron Impact ("EI") ion source; (ix) a Chemical Ionisation ("CI") ion source; (x) a Field Ionisation ("FI") ion source; (xi) a Field Desorption ("FD") ion source; (xii) an Inductively Coupled Plasma ("ICP") ion source; (xiii) a Fast Atom Bombardment ("FAB") ion source; (xiv) a Liquid Secondary Ion Mass Spectrometry ("LSIMS") ion source; (xv) a Desorption Electrospray Ionisation ("DESI") ion source; and (xvi) a Nickel-63 radioactive ion source.

The preferred embodiment relates to clustering liquid chromatography mass spectrometry (LC-MS) data acquired in separate experimental acquisitions, preferably on the basis of mass or mass to charge ratio and retention time e.g. chromatographic retention time. Advantageously, the preferred approach does not require samples to use a separate calibrant which is added to the samples in order to locate or recognise the same species of analyte in different experimental data. The use of calibrants which are introduced to samples can interfere with or suppress data. A calibrant may however be used periodically for a different purpose in experimental runs namely to ensure that the settings of mass spectrometer do not drift.

The preferred embodiment relates to processing LC-MS data and clustering such data. However, less preferably the disclosed probabilistic or Bayesian approach to clustering data could also be applied to Gas Chromatography Mass Spectrometry (GC-MS) data and other types of analysis wherein components, molecules or analytes are separated in time from other components.

According to the preferred embodiment a probabilistic measure is used to assess the closeness of data points on a pair-wise basis. This measure compares the hypothesis that the data arose from a single cluster against the hypothesis that the data arose from two distinct clusters considered a priori to be distributed randomly with uniform probability preferably within the mass-retention time plane.

In one dimension, where the clusters may appear in an interval $\Delta$ with uniform probability, a mean (of a Poisson distribution) of <N> clusters being expected and the positions of two data points are $x_i$ and $x_j$, the probability that two data points are associated with the same cluster is given by:

$$\Pr\left(x_i, x_j \text{ from same cluster}\right) = p_{ij} = \frac{L\left(x_i, x_j\right)}{L\left(x_i, x_j\right) + \frac{\langle N \rangle}{\Delta}}$$

where the mean <N> represents a flexible prior preference for the number of clusters as opposed to a predetermined number k as used in k-means clustering.

In the above equation, $L(x_i,x_j)$ is a probabalistic calculation of the likelihood that two data points $x_i$ and $x_j$ are data points relating to the same component, molecule or analyte (i.e. peptide digest product) present within two separate experimental acquisitions.

Assuming Gaussian errors and a uniform prior probability distribution for the location of clusters the likelihood that two data points relate to the same peptide can be given as:

$$L\left(x_i, x_j\right) = \frac{1}{\sqrt{2\pi\left(\sigma_i^2 + \sigma_j^2\right)}} e^{-\frac{1}{2}\frac{\left(x_i - x_j\right)^2}{\left(\sigma_i^2 + \sigma_j^2\right)}}$$

where $\sigma_i$ and $\sigma_j$ are the uncertainties in the positions $x_i$ and $x_j$ respectively. This generalizes to two or more dimensions.

The probability measure $p_{ij} \in [0,1]$ has the interpretation that two data belong to the same cluster rather than different clusters. Unlike k-means clustering, this probability has been integrated over all possible positions of the cluster centre.

Any trial configuration of clusters of the data can be assigned an overall probability Q by combining the pair-wise probability values $p_{ij}$ defined by the probability measure:

$$\log(\Pr(\textbf{cluster configuration})) \propto Q = \sum_{i=1}^{M}\left[\left(\sum_{j<i, j\in C_i}\log\left(p_{ij}\right)\right) + \left(\sum_{k<i, k\notin C_i}\log\left(1 - p_{ik}\right)\right)\right]$$

where $C_i$ is set of data assigned to the cluster to which datum i is assigned and M is the number of data points.

Once an initial viable trial configuration of clusters is found, it is preferably incrementally improved upon by seeking to maximize the overall probability or equivalently Q of the cluster.

According to the preferred embodiment some of the analytes relating to peptide digest products are preferably initially clustered using a matrix method. According to this method, the pair-wise probabilities $p_{ij}$ of two data points relating to the same species of peptide digest product are initially arranged in a matrix. The matrix preferably comprises the pair-wise probabilities $p_{ij}$ that every two data points are associated with the same cluster. For example, the following matrix represents the probabilities that the data points in each of the combinations of pairs of four data points A-D are related to the same cluster:

| | A | B | C | D |
|---|---|---|---|---|
| A | X | 0.8 | 0.3 | 0.1 |
| B | | X | 0.15 | 0.2 |
| C | | | X | 0.7 |
| D | | | | X |

In the above example, the matrix shows the probability $p_{ij}$ that point A is related to the same cluster as point B as being 0.8. Points A and B may therefore be considered reasonably likely to relate to the same cluster. In contrast, the probability $p_{ij}$ that point B relates to the same cluster as point D is 0.2. This may therefore be considered reasonably unlikely.

The matrix may then be analysed at various thresholds, between 0 and 1, so that those probabilities below the threshold are assigned a value of false (e.g. 0) whilst those above the threshold are assigned a value of true (e.g. 1) indicating which data are associated with the same cluster.

The resultant matrix of Boolean values $b_{ij}$ may not represent a viable cluster configuration as they may not obey the necessary transitivity property:

$$b_{jk} = b_{ij} \text{ AND } b_{ik}$$

The above condition is therefore preferably checked. If the transitivity property is not met then the trial truth table is preferably rejected.

The thresholding scheme may be generalized to act on various reconstructions of the matrix of pair-wise probabilities. These are preferably produced iteratively by decrementing the number of largest eigenvalues and corresponding eigenvectors of the original matrix to be used in the reconstructed matrix.

In the preferred embodiment, an initial cluster configuration may then be improved upon by considering orderings of the data points on the basis of mass and chromatographic retention time. The clusters to which data points belong can then be modified according to an iterative scheme for each ordering. According to this scheme, each datum may be put into a new cluster. It is also put into the previous datum's cluster, if distinct. It is also put into the next datum's cluster, if distinct.

This process may be repeated until no further improvement is found or a pre-assigned iteration limit is reached.

In the preferred embodiment the data is preferably divided into nominal mass ranges or bins. The difference in mass between the centres of two adjacent mass bins is preferably large enough such that data relating to different peptides do not fall into the same mass bin.

Amino acids have a mass sufficiency which varies from about 1.00009 to about 1.00074, with a mean mass sufficiency of approximately 1.00047. Accordingly, biological samples commonly exhibit a periodicity of approximately 1.0005 atomic mass units (Daltons) and hence the bins preferably are arranged to have a mass range of 1.0005 Da which corresponds to the mass of an average peptide baryon.

Multiple data for the same peptide tend to concentrate around the centre of a single mass bin. The likelihood of the data falling into an adjacent mass bin due to errors is therefore very low. As such, the data in different bins can be considered to relate to different peptides i.e. different clusters.

A particularly preferred aspect of the preferred embodiment is the alignment of the retention-time axes for the data from each acquisition. This is highly advantageous since reported retention times are usually uncalibrated and systematic differences often occur between data sets from each acquisition. The correct realignment of retention times from two data sets is therefore advantageous and the ability of the preferred embodiment to perform this step represents an important advance in the art.

In the preferred embodiment an initial pass of clustering is performed with only a relatively weak contribution from the proximity of data in retention time. This may be achieved by assigning large values to the retention time uncertainties for each datum.

Resulting clusters that have one and only one representative from each acquisition are used to form a list of potential reference points (with uncertainties) by taking averages (and standard deviations). Outliers are preferably rejected and the remaining references are used to re-align the retention times in each acquisition by a probabilistic calibration system.

Various embodiments of the present invention will now be described, by way of example only, and with reference to the accompanying drawings in which:

Fig. 1A shows a graph of mass against original retention time and shows error bars for the mass measurements and Fig. 1B shows a related graph of mass against original retention time for the same data as shown in Fig. 1A but shows instead error bars for the retention time measurements; and

Fig. 2A shows a graph of mass against retention time according to the preferred embodiment wherein the retention times have been realigned and shows the same error bars for the mass measurement as in Fig. 1A, and Fig. 2B shows a related graph of mass against retention time for the same data as shown in Fig. 2A but shows the significantly reduced error bars for the retention time measurements resulting from the preferred embodiment.

A preferred embodiment of the present invention will now be described. The table below relates to fifteen data points observed from liquid chromatography mass spectrometry experiments relating to four separate species of ions all having the same nominal mass of 2458 Daltons but which have different chromatographic retention times.

The masses of each of the peptide ions and their corresponding retention times are shown together with the standard deviation in each mass measurement. The data points were acquired from six separate acquisitions and were initially assigned to four separate clusters i.e. four distinct species of ion were believed to be present in the sample being analysed. The experimental data was then processed in accordance with the preferred embodiment to obtain re-aligned retention times.

| Datum | Acquisition | Mass (Da) | Mass SD | Original RT | Re-aligned RT | RT SD | Cluster |
|---|---|---|---|---|---|---|---|
| 1 | 1 | 2458.179 | 0.0075 | 78.6 | 78.6 | 0.21 | 1 |
| 3 | 6 | 2458.180 | 0.0074 | 79.0 | 78.6 | 0.22 | 1 |
| 5 | 2 | 2458.183 | 0.0078 | 77.7 | 78.3 | 0.22 | 1 |
| 11 | 5 | 2458.194 | 0.0074 | 77.0 | 78.6 | 0.22 | 1 |
| 2 | 3 | 2458.180 | 0.0085 | 66.8 | 66.3 | 0.22 | 2 |
| 4 | 5 | 2458.182 | 0.0085 | 61.4 | 63.1 | 0.22 | 3 |
| 6 | 3 | 2458.184 | 0.0076 | 63.6 | 63.1 | 0.22 | 3 |
| 7 | 4 | 2458.185 | 0.0080 | 64.0 | 62.6 | 0.25 | 3 |
| 8 | 2 | 2458.186 | 0.0100 | 62.4 | 63.3 | 0.22 | 3 |
| 9 | 6 | 2458.188 | 0.0081 | 63.8 | 63.3 | 0.22 | 3 |
| 10 | 1 | 2458.191 | 0.0075 | 63.2 | 63.2 | 0.22 | 3 |
| 12 | 6 | 2458.237 | 0.0077 | 80.8 | 80.4 | 0.22 | 4 |
| 13 | 1 | 2458.238 | 0.0085 | 80.7 | 80.6 | 0.21 | 4 |
| 14 | 5 | 2458.242 | 0.0079 | 79.0 | 80.6 | 0.22 | 4 |
| 15 | 2 | 2458.249 | 0.0086 | 79.9 | 80.5 | 0.22 | 4 |

Figs. 1A and 1B show plots of the fifteen experimental data points i.e. before the retention times have been re-aligned in accordance with the preferred embodiment. Fig. 1A shows a plot including mass error bars and Fig. 1B shows the same plot including error bars for retention time.

As will be understood by those skilled in the art, if the same sample is repeatedly analysed by liquid chromatography mass spectrometry then whilst the mass or mass to charge ratios of analytes ions may be fairly accurately reproduced from experiment to experiment, there will tend to be larger variations in the measured chromatographic retention time i.e. liquid chromatography is less reliable or reproducible than mass analysis. From one LC run to the next, the overall scale of the LC data will tend to drift and this drift can be particularly problematic when seeking to cluster or recognise the same species of component, molecule or analyte present in two or more separate samples. The drift in chromatographic retention times may be due to temperature or pressure drifts or due to the LC column clogging up.

It will be appreciated that whilst some analytes in separate experiments or samples can be confidently recognised as being the same species without requiring substantial processing of the data, it is often not possible to confidently recognise other species at least initially. The preferred embodiment therefore provides an important tool in being able to handle complex mixtures and effectively enables the chromatographic time scales for two sets of data to be realigned so that a much greater number of components in the two data sets can be confidently recognised as comprising the same species.

The data shown in Figs. 1A and 1B has been initially clustered using the matrix method approach discussed above. Although the error bars in the retention time for the experimental data are relatively large (as can be seen from Fig. 1B), nonetheless the matrix method approach was able to separate the data into four distinct clusters indicating that to a high level of certainty four different species of peptides or analytes are present.

The error bars shown in Figs. 1A and 1B are those estimated for the experiments and relate to calibrated, deisotoped and charge-state reduced masses. The error bars on retention times as shown in Fig. 1B were derived from a user input estimate of retention time precision. The retention time error bars are preferably chosen to represent the worst possible errors, rather than what might be typical, to ensure that the retention times are not treated with greater significance than is justified in the initial clustering procedure.

The experimental data as presented in the table above and as shown in Figs. 1A and 1B was then processed according to the preferred embodiment with the result that the chromatographic retention times were significantly realigned across the data sets.

Figs. 2A and 2B show experimental data after processing and clustering according to the preferred embodiment. As is apparent from these figures especially Fig. 2B, the retention times of the data have been significantly realigned such that it is apparent that the four clusters are indeed separate and distinct clusters.

It will appreciated that the data presented in the table above and as shown in Figs. 1A, 1B, 2A and 2B represents only a very small amount of data. The reduced amount of data is presented simply for reasons of clarity. In practice, the data sets may comprise thousands of data points in which case the significant improvement in clustering of data according to the preferred embodiment becomes even more pronounced.

The data points have been processed according to the preferred embodiment. It is apparent that the preferred method of processing the experimental data has been effective in realigning the retention times of the two data sets thereby enabling like species in the two different samples to be confidently correlated. As can be seen from comparing Fig. 1A and Fig. 2A the mass error bars for each data point remain the same after realigning the retention times according to the preferred embodiment i.e. according to the preferred embodiment the errors in the mass or mass to charge ratio determinations are substantially unaffected by the preferred embodiment.

The retention time error bars in the Fig. 2B are derived automatically from the probabilistic analysis according to the preferred embodiment. The error bars encompass the confidence in the determination for each retention time calculation and the confidence in the re-alignment factor applied to each data point. The confidence in the determination for each retention time calculation is largely determined by how many ions there are in the peak, the more ions the higher the confidence. If the retention time of a peak and the nearest reference peak are very similar then the confidence in the calibration at that retention time is high. If the retention time of the peak falls mid-way between those of two reference peaks then the confidence in the calibration is not so high. If the nearest two reference peaks are a long way apart then the confidence in the calibration at the mid-way point is even less.

According to a less preferred embodiment k-means clustering may initially be used to cluster data rather than using the preferred matrix method which was employed to initially cluster the data (as shown in Figs. 1A and 1B). If data is initially clustered using k-means clustering then the clustering of data is then preferably further improved upon by applying the preferred probabilistic approach to clustering the data.

Given the nature of the peptide mass sufficiency distribution, it is contemplated that a non-uniform or Gaussian prior distribution of peptide mass may be more appropriate in the calculation of the likelihood $L(x_i,x_j)$.

It is also contemplated that the mass and retention time ordering of data used in the iterative solution improvement stage may be replaced by an alternative approach based on Hilbert space-filling curves. This would improve the preservation of the locality of the two dimensional mass-retention time plane.

Although the present invention has been described with reference to preferred embodiments, it will be understood by those skilled in the art that various changes in form and detail may be made without departing from the scope of the invention as set forth in the accompanying claims.

## Claims

**1.** A method of mass spectrometry comprising:

determining a first physico-chemical property and a second physico-chemical property of components, molecules or analytes in a first sample, wherein said first physico-chemical property comprises the mass or mass to charge ratio and said second physico-chemical property comprises the elution time, hydrophobicity, hydrophilicity, migration time, or chromatographic retention time;
determining said first physico-chemical property and said second physico-chemical property of components, molecules or analytes in a second sample;
**characterised by**
probabilistically clustering data relating to components, molecules or analytes in said first sample with data relating to components, molecules or analytes in said second sample; said step of probabilistically clustering comprising:

comparing data points related to components, molecules or analytes in said first sample with data points related to components, molecules or analytes in said second sample,
clustering said data into one or more first clusters of data points,
probabilistically clustering the initially clustered data points into one or more second clusters of data points, wherein a probabilistic measure is used to assess the closeness of data points on a pair-wise basis,
interrogating said one or more second clusters of data points to determine one or more third clusters of data points which include only one data point representing a molecule, analyte or ion from each of said first sample and said second sample, wherein the data relating to said second physico-chemical property of molecules, analytes or ions in each of said one or more third clusters of data points is averaged to form an average value for said second physico-chemical property;

the method further comprising:

determining a calibration function to correlate data relating to the observed second physico-chemical property with said average value for said second physico-chemical property; and
adjusting data points from each sample to align the second physico-chemical property for all data sets.

**2.** A method as claimed in claim 1, wherein components, molecules or analytes in said first sample and/or said second sample and/or further samples are separated by liquid chromatography.

**3.** A method as claimed in claim 1 or 2, wherein components, molecules or analytes in said first sample and/or said second sample and/or further samples are separated from other components, molecules or analytes: (i) High Performance Liquid Chromatography ("HPLC"); (ii) anion exchange; (iii) anion exchange chromatography; (iv) cation exchange; (v) cation exchange chromatography; (vi) ion pair reversed-phase chromatography; (vii) chromatography; (vii) single dimensional electrophoresis; (ix) multi-dimensional electrophoresis; (x) size exclusion; (xi) affinity; (xii) revere phase chromatography; (xiii) Capillary Electrophoresis Chromatography ("CEC"); (xiv) electrophoresis; (xv) ion mobility separation; (xvi) Field Asymmetric Ion Mobility Separation ("FAIMS"); or (xvi) capillary electrophoresis.

**4.** A method as claimed in claim 1, 2 or 3, comprising forming a single data set from data relating to said first sample and/or data relating to said second sample and/or data relating to further samples.

**5.** A method as claimed in any preceding claim, wherein each data point comprises a value of said first physico-chemical property and/or a value of said second physico-chemical property.

**6.** A method as claimed in any preceding claim, wherein said step of clustering said data points into one or more first clusters of data points comprises probabilistically clustering said data points.

**7.** A method as claimed in any preceding claim, wherein the step of clustering data into one or more first clusters comprises assessing the closeness of data points on a pairwise basis.

**8.** A method as claimed in any preceding claim, wherein the step of clustering data into one or more first clusters comprises calculating probabilistically the likelihood that two data points relate to the same component, molecule or analyte.

**9.** A method as claimed in any preceding claim, wherein data of said one or more data points clustered to form said third clusters of data points is adjusted such that said average value becomes the value of said second physico-chemical property for said data points.

**10.** A method as claimed in any preceding claim, further comprising comparing adjusted data points related to components, molecules or analytes in said first sample with adjusted data points related to components, molecules or analytes in said second sample and/or adjusted data points related to components, molecules or analytes in further samples.

**11.** A method as claimed in claim 10, wherein each adjusted data point comprises an unadjusted value of said first physico-chemical property and/or an adjusted value of said second physico-chemical property.

**12.** A method as claimed in any preceding claim, further comprising determining the intensity of first components, molecules or analytes in said first sample and/or first components, molecules or analytes in said second sample and/or first components, molecules or analytes in further samples.

**13.** A method as claimed in claim 12, further comprising comparing the intensity of said first components, molecules or analytes in said first sample with corresponding first components, molecules or analytes in said second sample and/or further samples, wherein said first components, molecules or analytes belong to the same clustering of data.

**14.** A method as claimed in any preceding claim, wherein said components, molecules or analytes in said first sample are substantially the same as said components, molecules or analytes in said second sample and/or further samples.

**15.** A method as claimed in any preceding claim, wherein said components, molecules or analytes are endogenous or exogenous to said first sample and/or said second sample and/or further samples.

**16.** A method as claimed in any preceding claim, wherein either: (i) said first sample is taken from a diseased organism and said second sample is taken from a non-diseased organism; (ii) said first sample is taken from a treated organism and said second sample is taken from a non-treated organism; or (iii) said first sample is taken from a mutant organism and said second sample is taken from a wild type organism.

**17.** A method as claimed in any preceding claim, further comprising identifying one or more of said components, molecules or analytes in said first sample and/or said second sample and/or further samples.

**18.** A method as claimed in any preceding claim, wherein one or more components, molecules or analytes in said first sample and/or one or more components, molecules or analytes in said second sample and/or one or more components, molecules or analytes in further samples are only identified if the intensity of one or more components, molecules or analytes in said first sample differ from the intensity of one or more components, molecules or analytes in said second sample and/or further samples by more than a predetermined amount.

**19.** A mass spectrometer comprising:

means arranged to determine a first physico-chemical property and a second physico-chemical property of components, molecules or analytes in a first sample, wherein said first physico-chemical property comprises the mass or mass to charge ratio and said second physico-chemical property comprises the elution time, hydrophobicity, hydrophilicity, migration time, or chromatographic retention time; and
means arranged to determine said first physico-chemical property and said second physico-chemical property of components, molecules or analytes in a second different sample:

**characterised by** means arranged to probabilistically cluster data relating to components, molecules or analytes in said first sample with data relating to components, molecules or analytes in said second sample;
the means arranged to probabilistically cluster data comprising means arranged to compare data points related to components, molecules or analytes in said first sample with data points related to components, molecules or analytes in said second sample, cluster said data into one or more first clusters of data points, probabilistically cluster the initially clustered data points into one or more second clusters of data points, wherein a probabilistic measure is used to assess the closeness of data points on a pair-wise basis, interrogate said one or more second clusters of data points to determine one or more third clusters of data points which include only one data point representing a molecule, analyte or ion from each of said first sample and said second sample, wherein the data relating to said second physico-chemical property of molecules, analytes or ions in each of said one or more third clusters of data points is averaged to form an average value for said second physico-chemical property;
the mass spectrometer further comprising means arranged to determine a calibration function to correlate data relating to the observed second physico-chemical property with said average value for said second physico-chemical property; and
means arranged to adjust data points from each sample to align the second physico-chemical property for all data sets.

**Patentansprüche**

1. Massenspektrometrieverfahren umfassend:

   Bestimmen einer ersten physikalisch-chemischen Eigenschaft und einer zweiten physikalisch-chemischen Eigenschaft von Komponenten, Molekülen oder Analyten in einer ersten Probe, wobei die erste physikalisch-chemische Eigenschaft die Masse oder das Masse-zu-Ladungs-Verhältnis umfasst und die zweite physikalisch-chemische Eigenschaft die Elutionszeit, Hydrophibizität, Hydrophilie, Migrationszeit oder chromatographische Retentionszeit umfasst;
   Bestimmen der ersten physikalisch-chemischen Eigenschaft und der zweiten physikalisch-chemischen Eigenschaft von Komponenten, Molekülen oder Analyten in einer zweiten Probe;
   **gekennzeichnet durch**
   probalistisches Clustern von Daten betreffend Komponenten, Moleküle oder Analyte in der ersten Probe mit Daten betreffend Komponenten, Molekül oder Analyte in der zweiten Probe; wobei der Schritt des probalistischen Clusterns umfasst:

      Vergleichen von Datenpunkten betreffend Komponenten, Molekeküle oder Analyte in der ersten Probe mit Datenpunkten betreffend Komponenten, Moleküle oder Analyte in der zweiten Probe,
      Clustern der Daten in ein oder mehrere erste Datenpunktcluster,
      probalistisches Clustern der ursprünglich geclusterten Datenpunkte in ein oder mehrere zweite Datenpunktcluster, wobei ein probalistisches Maß verwendet wird, um die Nähe der Datenpunkte auf einer paarweisen Basis festzustellen,
      Abfragen der ein oder mehreren zweiten Datenpunktcluster, um ein oder mehrere dritte Datenpunktcluster zu bestimmen, die nur einen Datenpunkt umfassen, der ein Molekül, einen Analyten oder ein Ion einer jeden der ersten Probe und zweiten Probe repräsentiert, wobei die Daten betreffend die zweite physikalisch-chemische Eigenschaft von Molekülen, Analyten oder Ionen in jedem der ein oder mehr dritten Datenpunktcluster gemittelt wird, um einen Mittelwert für die zweite physikalisch-chemisch Eigenschaft zu bilden;

   wobei das Verfahren weiterhin umfasst:

      Bestimmen einer Kalibrierfunktion, um Daten betreffend die beobachtete zweite physikalisch-chemische Eigenschaft mit dem Mittelwert für die zweite physikalisch-chemische Eigenschaft zu korrelieren; und
      Anpassen der Datenpunkte aus jeder Probe, um die zweite physikalisch-chemische Eigenschaft für alle Datensätze zu alignieren.

2. Verfahren nach Anspruch 1, wobei Komponenten, Moleküle und Analyte in der ersten Probe und/oder zweiten Probe und/oder weiteren Proben mittels Flüssigchromatographie getrennt werden.

3. Verfahren nach Anspruch 1 oder 2, wobei Komponenten, Moleküle und Analyte in der ersten Probe und/oder zweiten Probe und/oder weiteren Proben von weiteren Komponenten, Molekülen oder Analyten getrennt werden mittels: (i) Hochleistungsflüssigchromatographie (*high performance liquid chromatographie,* HPLC); (ii) Ionenaustausch, (iii) Anionenaustauschchromatographie; (iv) Kationenaustausch; (v) Kationenaustauschchromatographie; (vi) Ionenpaar-Umkehrphasenchromatographie; (vii) Chromatographie; (vii) eindimensionale Elektrophorese; (ix) mehrdimensionale Elektrophorese; (x) Größenausschluss; (xi) Affinität; (xii) Umkehrphasenchromatographie; (xiii) Kapillarelektrophoresen-chromatographie (*capillary elektrophoresis chromatography,* CEC); (xiv) Elektrophorese; (xv) Ionenmobilitätstrennung; (xvi) Hochfeld-asymmetrische Wellenform-Ionenmobilitätsspektrometrie (*field assymetric ion mobility separation,* FAIMS); (xvi) Kapillarelektrophorese.

4. Verfahren nach Anspruch 1, 2 oder 3 umfassend Bilden eines einzelnen Datensatzes aus Daten betreffend die erste Probe und/oder Daten betreffend die zweite Probe und/oder Daten betreffend weitere Proben.

5. Verfahren nach einem der vorherigen Ansprüche, wobei jeder Datenpunkt einen Wert der ersten physikalisch-chemischen Eigenschaft und/oder einen Wert der zweiten physikalisch-chemische Eigenschaft umfasst.

6. Verfahren nach einem der vorherigen Ansprüche, wobei der Schritt des Clusterns der Datenpunkte in ein oder mehrere erste Datenpunktcluster probalistisches Clustern der Datenpunkte umfasst.

7. Verfahren nach einem der vorherigen Ansprüche, wobei der Schritt des Clusterns von Daten in ein oder mehrere erste Cluster Feststellen der Nähe von Datenpunkten auf einer paarweisen Basis umfasst.

8. Verfahren nach einem der vorherigen Ansprüche, wobei der Schritt des Clusterns von Daten in ein oder mehrere erste Cluster probalistisches Berechnen der Wahrscheinlichkeit, dass zwei Datenpunkte die gleiche Komponente, das gleiche Molekül oder den gleichen Analyten betreffen, umfasst.

9. Verfahren nach einem der vorherigen Ansprüche, wobei Daten der ein oder mehreren Datenpunkte, die geclustert sind, um die dritten Datenpunktcluster zu bilden, so angepasst werden, dass der Mittelwert zum Wert der zweiten physikalisch-chemischen Eigenschaften für die Datenpunkte wird.

10. Verfahren nach einem der vorherigen Ansprüche weiterhin umfassend Vergleichen von angepassten Datenpunkten betreffend Komponenten, Moleküle oder Analyte in der ersten Probe mit angepassten Datenpunkten betreffend Komponenten, Moleküle oder Analyte in der zweiten Probe und/oder angepassten Datenpunkten betreffend Komponenten, Moleküle oder Analyte in weiteren Proben.

11. Verfahren nach Anspruch 10, wobei jeder angepasste Datenpunkt einen unangepassten Wert der ersten physikalisch-chemischen Eigenschaft und/oder einem angepassten Wert der zweiten physikalisch-chemischen Eigenschaft umfasst.

12. Verfahren nach einem der vorherigen Ansprüche weiterhin umfassend Bestimmen der Intensität von ersten Komponenten, Molekülen oder Analyten in der ersten Probe und/oder ersten Komponenten, Molekülen, Analyten in der zweiten Probe und/oder ersten Komponenten, Molekülen oder Analyten in weiteren Proben.

13. Verfahren nach Anspruch 12 weiterhin umfassend Vergleichen der Intensität der ersten Komponenten, Moleküle oder Analyte in der ersten Probe mit entsprechenden ersten Komponenten, Molekülen oder Analyten in der zweiten Probe und/oder weiteren Proben, wobei die ersten Komponenten, Moleküle oder Analyte zu dem gleichen Datenclustering gehören.

14. Verfahren nach einem der vorherigen Ansprüche, wobei die Komponenten, Moleküle oder Analyte in der ersten Probe im Wesentlichen die gleichen sind wie die Komponenten, Moleküle oder Analyte in der zweiten Probe und/oder weiteren Proben.

15. Verfahren nach einem der vorherigen Ansprüche, wobei die Komponenten, Moleküle oder Analyte zu der ersten Probe und/oder zweiten Probe und/oder weiteren Probe endogen oder exogen sind.

16. Verfahren nach einem der vorherigen Ansprüche, wobei entweder: (i) die erste Probe einem verstorbenen Organismus und die zweite Probe einem nicht verstorbenen Organismus entnommen wird; (ii) die erste Probe einem behandelten Organismus und die zweite Probe einem nicht behandelten Organismus entnommen wird; oder (iii) die erste Probe einem mutierten Organismus und die zweite Probe einem Wildtyp-Organismus entnommen wird.

17. Verfahren nach einem der vorherigen Ansprüche weiterhin umfassend Identifizieren von ein oder mehreren Komponenten, Molekülen oder Analyten in der ersten Probe und/oder zweiten Probe und/oder weiteren Proben.

18. Verfahren nach einem der vorherigen Ansprüche, wobei ein oder mehrere Komponenten, Moleküle oder Analyte in der ersten Probe und/oder ein oder mehrere Komponenten, Moleküle oder Analyte in der zweiten Probe und/oder ein oder mehrere Komponenten, Moleküle oder Analyte in weiteren Proben nur identifiziert werden, wenn sich die Intensität von ein oder mehreren Komponenten, Molekülen oder Analyten in der ersten Probe sich von der Intensität von ein oder mehreren Komponenten, Molekülen oder Analyten in der zweiten Probe und/oder weiteren Proben um mehr als eine vorbestimmte Menge unterscheidet.

19. Massenspektrometer umfassend:

Mittel angeordnet zum Bestimmen einer ersten physikalisch-chemischen Eigenschaft und einer zweiten physikalisch-chemischen Eigenschaft von Komponenten, Molekülen oder Analyten in einer ersten Probe, wobei die erste physikalisch-chemische Eigenschaft die Masse oder das Masse-zu-Ladungs-Verhältnis umfasst und die zweite physikalisch-chemische Eigenschaft die Elutionszeit, Hydrophibizität, Hydrophilie, Migrationszeit oder chromatographische Retentionszeit umfasst; und
Mittel angeordnet zum Bestimmen der ersten physikalisch-chemischen Eigenschaft und der zweiten physikalisch-chemischen Eigenschaft von Komponenten, Molekülen oder Analyten in einer zweiten unterschiedlichen Probe;
**gekennzeichnet durch** Mittel angeordnet zum probalistischen Clustern von Daten betreffend Komponenten, Moleküle oder Analyte in der ersten Probe mit Daten betreffend Komponenten, Moleküle oder Analyte in der zweiten Probe; wobei die Mittel angeordnet sind probalistischen Clustern von Daten, umfassend Mittel angeordnet zum Vergleichen von Datenpunkten betreffend Komponenten, Moleküle oder Analyte in der ersten Probe mit Datenpunkten betreffend Komponenten, Moleküle oder Analyte in der zweite Probe, Clustern der Daten in ein oder mehrere erste Datenclusterpunkte, probalistisches Clustern der ursprünglich geclusterten Datenpunkte in ein oder mehrere zweite Datenpunktcluster, wobei ein probalistisches Maß verwendet wird, um die Nähe der Datenpunkte auf einer paarweise Basis festzustellen, Abfragen der ein oder mehreren zweiten Datenpunktcluster, um ein oder mehr dritte Datenpunktcluster zu bestimmen, die nur einen Datenpunkt umfassen, der ein Molekül, einen Analyten oder ein Ion einer jeden der ersten Probe und zweiten Probe repräsentiert, wobei die Daten betreffend die zweite physikalisch-chemische Eigenschaft von Molekülen, Analyten oder Ionen in jedem der ein oder mehr dritten Datenpunktclustern gemittelt wird, um einen Mittelwert für die zweite physikalisch-chemische Eigenschaft zu bilden;
wobei das Massenspektrometer Mittel umfasst, die angeordnet sind, um eine Kalibrierfunktion zu bestimmen, um Daten betreffend die beobachtete zweite physikalisch-chemische Eigenschaft mit dem Mittelwert für die zweite physikalisch-chemische Eigenschaft zu korrelieren; und
Mittel angeordnet zum Anpassen von Datenpunkten von jeder Probe, um die zweite physikalisch-chemische Eigenschaft für alle Datensätze zu alignieren.

## Revendications

1. Procédé de spectrométrie de masse comprenant les étapes consistant à :

déterminer une première propriété physicochimique et une seconde propriété physicochimique de composants, molécules ou analytes dans un premier échantillon, dans lequel ladite première propriété physicochimique comprend la masse ou le rapport de la masse à la charge et ladite seconde propriété physicochimique comprend le temps d'élution, le caractère hydrophobe, le caractère hydrophile, le temps de migration ou le temps de rétention chromatographique ;
déterminer ladite première propriété physicochimique et ladite seconde propriété physicochimique de composants, molécules ou analytes dans un second échantillon ;
**caractérisé par** l'étape consistant à :

regrouper de manière probabiliste les données se rapportant aux composants, molécules ou analytes dudit premier échantillon avec des données se rapportant aux composants, molécules ou analytes dudit second échantillon ; ladite étape de regroupement probabiliste comprenant les étapes consistant à :
comparer les points de données se rapportant aux composants, molécules ou analytes dudit premier échantillon aux points de données se rapportant aux composants, molécules ou analytes dudit second échantillon,
regrouper lesdites données en une ou plusieurs premières grappes de points de données,
regrouper de manière probabiliste les points de données initialement regroupés en une ou plusieurs deuxièmes grappes de points de données, dans lequel une mesure probabiliste est utilisée pour évaluer la densité des points de données sur la base de paires,
interroger lesdites une ou plusieurs deuxièmes grappes de points de données pour déterminer une ou plusieurs troisièmes grappes de points de données qui comprennent uniquement un point de données représentant une molécule, un analyte ou un ion provenant de chacun dudit premier échantillon et dudit second échantillon, dans lequel les données se rapportant à ladite seconde propriété physicochimique des molécules, analytes ou ions dans chacune desdites une ou plusieurs troisièmes grappes de points de données sont prises en moyenne pour former une valeur moyenne pour ladite seconde propriété physicochimique ;
le procédé comprenant en outre les étapes consistant à :

déterminer une fonction d'étalonnage pour corréler les données se rapportant à la seconde propriété physicochimique observée avec ladite valeur moyenne pour ladite seconde propriété physicochimique ; et

ajuster les points de données de chaque échantillon pour aligner la seconde propriété physicochimique pour tous les ensembles de données.

**2.** Procédé selon la revendication 1, dans lequel les composants, molécules ou analytes dudit premier échantillon et/ou dudit second échantillon et/ou d'autres échantillons sont séparés par chromatographie en phase liquide.

**3.** Procédé selon la revendication 1 ou la revendication 2, dans lequel les composants, molécules ou analytes dudit premier échantillon et/ou dudit second échantillon et/ou d'autres échantillons sont séparés d'autres composants, molécules ou analytes par : (i) chromatographie en phase liquide de haute performance (« HPLC ») ; (ii) échange d'anions ; (iii) chromatographie par échange d'anions ; (iv) échange de cations ; (v) chromatographie par échange de cations ; (vi) chromatographie en phase inverse par paires d'ions ; (vii) chromatographie ; (viii) électrophorèse unidimensionnelle ; (ix) électrophorèse multidimensionnelle ; (x) exclusion de tailles ; (xi) affinité ; (xii) chromatographie en phase inverse ; (xiii) chromatographie par électrophorèse capillaire (« CEC ») ; (xiv) électrophorèse ; (xv) séparation par mobilité ionique ; (xvi) séparation par mobilité ionique à champ asymétrique (« FAIMS ») ; ou (xvi) électrophorèse capillaire.

**4.** Procédé selon la revendication 1, 2 ou 3, comprenant la formation d'un ensemble de données unique à partir de données se rapportant audit premier échantillon et/ou de données se rapportant audit second échantillon et/ou de données se rapportant à d'autres échantillons.

**5.** Procédé selon l'une quelconque des revendications précédentes, dans lequel chaque point de données comprend une valeur de ladite première propriété physicochimique et/ou une valeur de ladite seconde propriété physicochimique.

**6.** Procédé selon l'une quelconque des revendications précédentes, dans lequel ladite étape de regroupement desdits points de données en une ou plusieurs premières grappes de points de données comprend le regroupement probabiliste desdits points de données.

**7.** Procédé selon l'une quelconque des revendications précédentes, dans lequel l'étape de regroupement de données en une ou plusieurs premières grappes comprend l'évaluation de la densité de points de données sur une base par paires.

**8.** Procédé selon l'une quelconque des revendications précédentes, dans lequel l'étape de regroupement de données en une ou plusieurs premières grappes comprend le calcul au plan probabiliste de la vraisemblance que deux points de données se rapportent au même composant, à la même molécule ou au même analyte.

**9.** Procédé selon l'une quelconque des revendications précédentes, dans lequel les données desdits un ou plusieurs points de données regroupés pour former lesdites troisièmes grappes de points de données sont ajustées de sorte que ladite valeur moyenne devienne la valeur de ladite seconde propriété physicochimique pour lesdits points de données.

**10.** Procédé selon l'une quelconque des revendications précédentes, comprenant en outre la comparaison des points de données ajustés se rapportant aux composants, molécules ou analytes dudit premier échantillon à des points de données ajustés se rapportant aux composants, molécules ou analytes dudit second échantillon et/ou à des points de données ajustés se rapportant aux composants, molécules ou analytes d'autres échantillons.

**11.** Procédé selon la revendication 10, dans lequel chaque point de données ajusté comprend une valeur non ajustée de ladite première propriété physicochimique et/ou une valeur ajustée de ladite seconde propriété physicochimique.

**12.** Procédé selon l'une quelconque des revendications précédentes, comprenant en outre la détermination de l'intensité de premiers composants, molécules ou analytes dudit premier échantillon et/ou de premiers composants, molécules ou analytes dudit second échantillon et/ou de premiers composants, molécules ou analytes d'autres échantillons.

**13.** Procédé selon la revendication 12, comprenant en outre la comparaison de l'intensité desdits premiers composants, molécules ou analytes dudit premier échantillon à des premiers composants, molécules ou analytes correspondants dudit second échantillon et/ou d'autres échantillons, dans lequel lesdits premiers composants, molécules ou analytes appartiennent au même regroupement de données.

**14.** Procédé selon l'une quelconque des revendications précédentes, dans lequel lesdits composants, molécules ou analytes dudit premier échantillon sont sensiblement les mêmes que lesdits composants, molécules ou analytes dudit second échantillon et/ou d'autres échantillons.

**15.** Procédé selon l'une quelconque des revendications précédentes, dans lequel lesdits composants, molécules ou analytes sont endogènes ou exogènes par rapport audit premier échantillon et/ou audit second échantillon et/ou à d'autres échantillons.

**16.** Procédé selon l'une quelconque des revendications précédentes, dans lequel : (i) ledit premier échantillon est tiré d'un organisme atteint et ledit second échantillon est tiré d'un organisme non atteint ; (ii) ledit premier échantillon est tiré d'un organisme traité et ledit second échantillon est tiré d'un organisme non traité ; ou (iii) ledit premier échantillon est tiré d'un organisme mutant et ledit second échantillon est tiré d'un organisme de type sauvage.

**17.** Procédé selon l'une quelconque des revendications précédentes, comprenant en outre l'identification d'un ou plusieurs desdits composants, molécules ou analytes dudit premier échantillon et/ou dudit second échantillon et/ou d'autres échantillons.

**18.** Procédé selon l'une quelconque des revendications précédentes, dans lequel un ou plusieurs composants, molécules ou analytes dudit premier échantillon et/ou un ou plusieurs composants, molécules ou analytes dudit second échantillon et/ou un ou plusieurs composants, molécules ou analytes d'autres échantillons sont uniquement identifiés si l'intensité d'un ou plusieurs composants, molécules ou analytes dudit premier échantillon diffère de l'intensité d'un ou plusieurs composants, molécules ou analytes dudit second échantillon et/ou d'autres échantillons de plus d'une quantité prédéterminée.

**19.** Spectromètre de masse comprenant :

des moyens aménagés pour déterminer une première propriété physicochimique et une seconde propriété physicochimique de composants, molécules ou analytes d'un premier échantillon, dans lequel ladite première propriété physicochimique comprend la masse ou le rapport de la masse à la charge et ladite seconde propriété physicochimique comprend le temps d'élution, le caractère hydrophobe, le caractère hydrophile, le temps de migration ou le temps de rétention chromatographique ; et

des moyens aménagés pour déterminer ladite première propriété physicochimique et ladite seconde propriété physicochimique de composants, molécules ou analytes d'un second échantillon différent ;

**caractérisé par** des moyens aménagés pour regrouper de manière probabiliste des données se rapportant à des composants, molécules ou analytes dudit premier échantillon avec des données se rapportant aux composants, molécules ou analytes dudit second échantillon ; les moyens aménagés pour regrouper de manière probabiliste les données comprenant des moyens aménagés pour comparer les points de données se rapportant aux composants, molécules ou analytes dudit premier échantillon à des points de données se rapportant aux composants, molécules ou analytes dudit second échantillon, regrouper lesdites données en une ou plusieurs premières grappes de points de données, regrouper de manière probabiliste les points de données initialement regroupés en une ou plusieurs secondes grappes de points de données, dans lequel une mesure probabiliste est utilisée pour évaluer la densité de points de données sur la base par paires, interroger lesdites une ou plusieurs secondes grappes de points de données pour déterminer une ou plusieurs troisièmes grappes de points de données qui comprennent seulement un point de données représentant une molécule, un analyte ou un ion provenant de chacun dudit premier échantillon et dudit second échantillon, dans lequel les données se rapportant à ladite seconde propriété physicochimique de molécules, analytes ou ions de chacun desdites une ou plusieurs grappes de points de données sont prises en moyenne pour former une valeur moyenne pour ladite seconde propriété physicochimique ;

le spectromètre de masse comprenant en outre des moyens aménagés pour déterminer une fonction d'étalonnage pour corréler les données se rapportant à la seconde propriété physicochimique observée avec ladite valeur moyenne pour ladite seconde propriété physicochimique ; et

des moyens aménagés pour ajuster des points de données provenant de chaque échantillon afin d'aligner la seconde propriété physicochimique pour tous les ensembles de données.

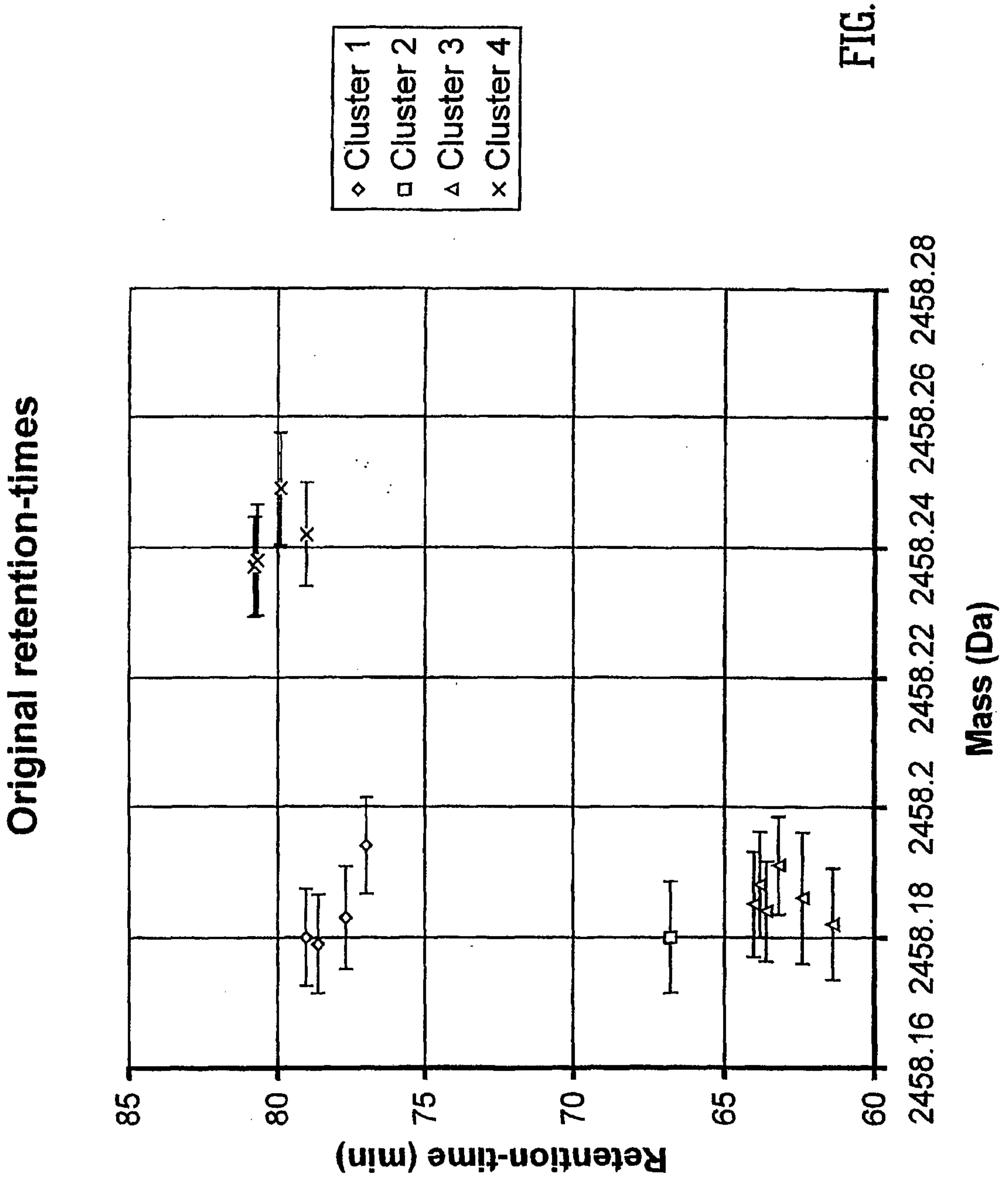
Original retention-times
Cluster 1
Cluster 2
Cluster 3
Cluster 4
Retention-time (min)
85
80
75
70
65
60
2458.16
2458.18
2458.2
2458.22
2458.24
2458.26
2458.28
Mass (Da)

FIG. 1A

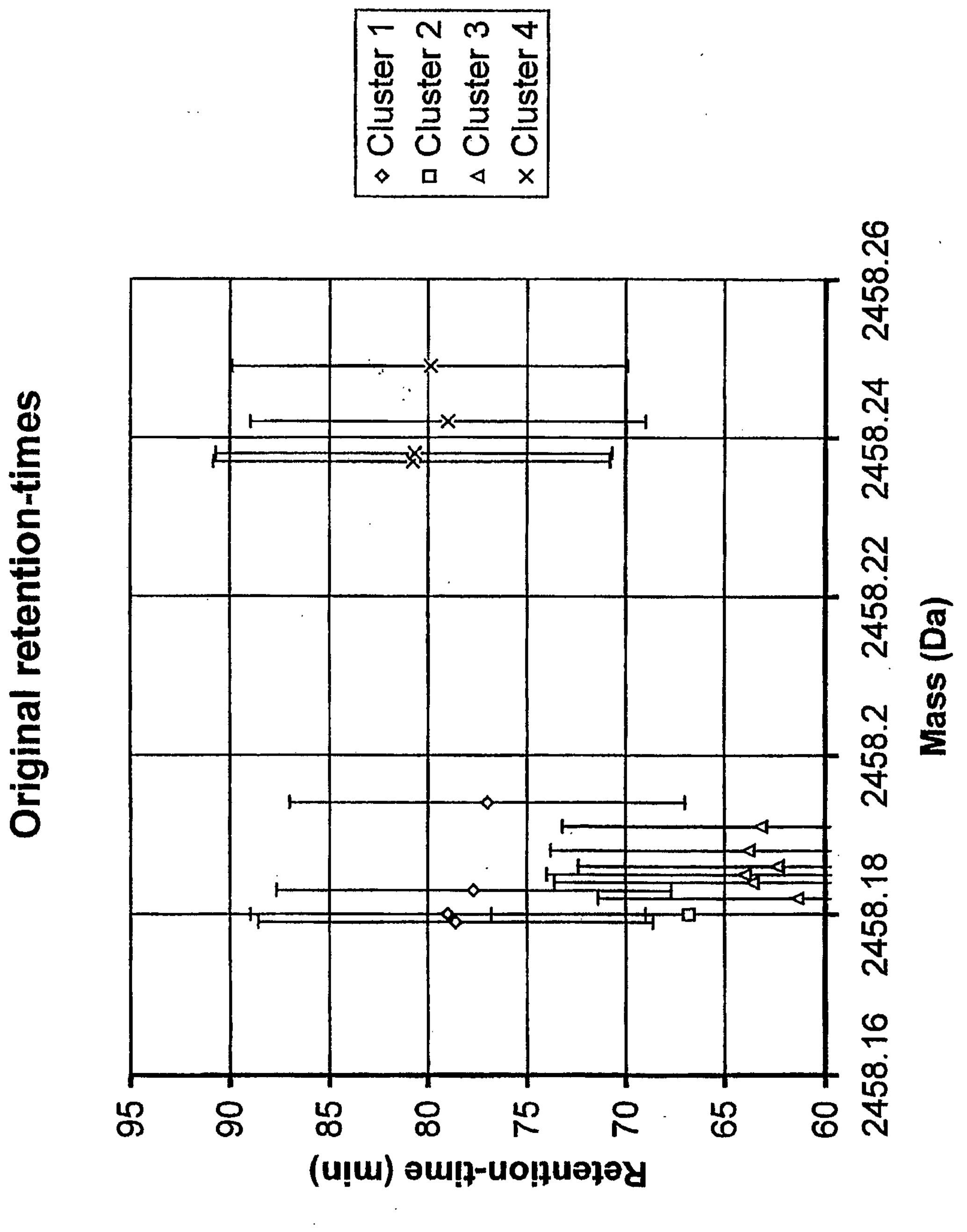
Original retention-times
Retention-time (min)
95
90
85
80
75
70
65
60
2458.16
2458.18
2458.2
2458.22
2458.24
2458.26
Mass (Da)
Cluster 1
Cluster 2
Cluster 3
Cluster 4

FIG. 1B

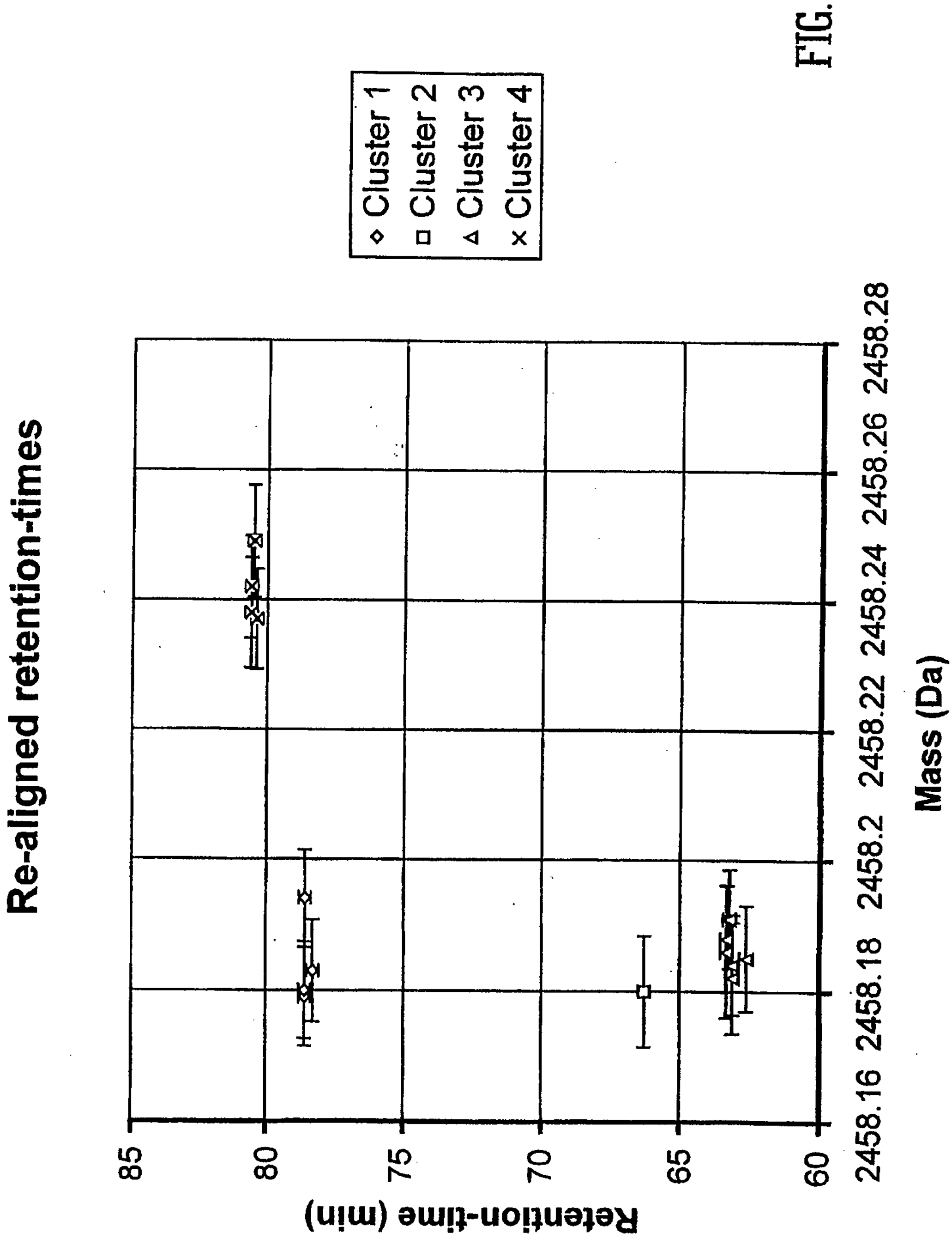
Re-aligned retention-times
Cluster 1
Cluster 2
Cluster 3
Cluster 4
Retention-time (min)
85
80
75
70
65
60
2458.16
2458.18
2458.2
2458.22
2458.24
2458.26
2458.28
Mass (Da)

FIG. 2A

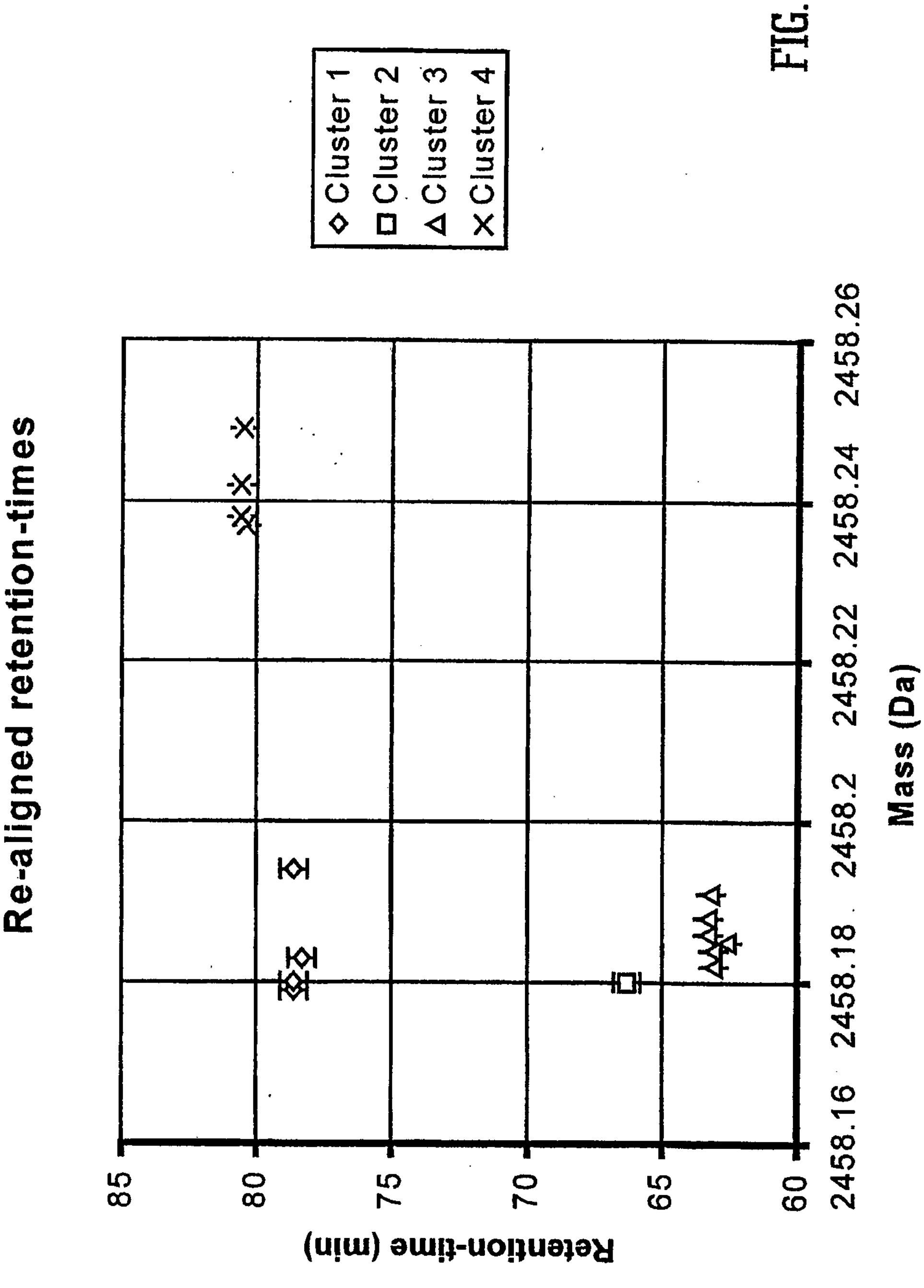
Re-aligned retention-times
Retention-time (min)
85
80
75
70
65
60
2458.16
2458.18
2458.2
2458.22
2458.24
2458.26
Mass (Da)
Cluster 1
Cluster 2
Cluster 3
Cluster 4

FIG. 2B